# FASCICULE DE BREVET EUROPEEN

(11) **EP 0 879 995 B1**
(45) Date de publication et mention de la délivrance du brevet: **02.07.2003**
(21) Numéro de dépôt: 98401212.0
(22) Date de dépôt: 20.05.1998
(51) Int. Cl.: F23R 3/22, F02K 1/38

(54) **Système de réchauffe dichotomique réduisant les pertes en sec.**
Flammenhalter mit niedrigem Luftwiderstand bei nichtwirksamer Stellung für einen Nachbrenner
Afterburning flameholder of low drag in "dry" position

(30) Priorité: 22.05.1997 FR 9706233
(43) Date de publication de la demande: 25.11.1998
(73) Titulaire: SNECMA MOTEURS, 75015 Paris (FR)
(72) Inventeur: Alassoeur, Philippe, Louis, André, 45160 Olivet (FR); Guyonnet, Xavier, Jean, Michel, André, 77310 Saint Fargeau Ponthierry (FR); Le Jeune, Pascal, Michel, Daniel, 77210 Avon (FR)
(74) Mandataire: Berrou, Paul

(56) Documents cités:
- EP-A- 0 315 486
- US-A- 4 335 573
- US-A- 4 686 826

## Description

Les turboréacteurs multiflux propulsant les avions militaires sont équipés d'une chambre de postcombustion ou de "réchauffe" constituant une deuxième chambre de combustion.

Cette deuxième chambre de combustion permet d'injecter une deuxième fois de l'énergie calorifique aux gaz de combustion entre le moment où ils sortent de la turbine et le moment où ils sont éjectés de la tuyère.

Les gaz du flux secondaire servent au refroidissement de la chambre de postcombustion et constituent un apport de comburant non brûlé dans cette chambre de postcombustion.

Les systèmes de réchauffe permettent d'augmenter la vitesse d'éjection des gaz et d'augmenter la poussée des turboréacteurs lorsqu'ils sont en fonctionnement, comme décrit dans le document US 4 335 573A.

Ces systèmes comportent des injecteurs de carburant et des dispositifs appelés *accroche-flammes* constitués, par exemple, par des bras radiaux. Ces bras ont pour rôle de stabiliser la flamme dans le flux de gaz issu du générateur. L'accrochage de la flamme est obtenu en créant une zone de recirculation d'air au moyen d'un obstacle qui génère des turbulences.

Si les bras accroche-flammes sont indispensables lorsqu'on fonctionne avec la réchauffe, ils sont par contre inutiles, voire parasites, lors'du fonctionnement en "régime sec", puisqu'ils sont générateurs de pertes d'énergie et engendrent une dégradation du rendement du moteur.

L'invention propose un système simple de stabilisation de la flamme qui offre une traînée très faible en fonctionnement en régime sec et qui est capable, en fonctionnement en régime de postcombustion, de créer de façon aérodynamique, une turbulence dans la chambre de postcombustion.

L'invention est donc relative à un dispositif de postcombustion pour turboréacteur double flux comprenant :
une enceinte annulaire externe, qui est délimitée par une première paroi externe et par une deuxième paroi interne possédant, chacune, un axe de sensible révolution qui leur est commun, ladite enceinte constituant un canal d'écoulement de comburant secondaire ;
une enceinte interne d'échappement qui est contenue à l'intérieur de la deuxième paroi interne en étant séparée de l'enceinte externe par ladite deuxième paroi interne et qui, disposée en aval d'aubages de turbine, constitue un canal d'échappement des gaz s'échappant desdits aubages ;
une chambre de postcombustion, qui est délimitée par une troisième paroi disposée axialement en aval desdites première et deuxième parois et qui constitue un prolongement axial vers l'aval lesdites enceintes externe et d'échappement ; et
un dispositif accroche-flammes comportant une pluralité de bras sensiblement radiaux régulièrement repartis autour de l'axe de révolution, ledit dispositif accroche-flammes étant disposé entre les enceintes interne et externe, d'une part, et la chambre de postcombustion, d'autre part.

Selon l'invention chaque bras est constitué d'une partie arrière fixe et d'une partie avant séparable de la partie arrière selon un plan de joint médian sensiblement perpendiculaire à l'axe de révolution, les parties avant sont fixées sur un anneau tournant monté rotatif à l'extrémité aval de la première paroi et il est prévu un dispositif de commande pour faire pivoter l'anneau tournant autour de l'axe de révolution entre une première position, en régime sec, dans laquelle les parties avant sont jointives avec les parties arrière, et une deuxième position, en régime de réchauffe, dans laquelle les parties avant alternent circonférentiellement avec les parties arrière, les parties avant et les parties arrière formant ensemble des profils aérodynamiques à faible traînée et à angle d'incidence nul, lorsque l'anneau tournant est dans la première position.

Les avantageuses dispositions suivantes sont, en outre, de préférence adoptées :
- les parties avant et les parties arrière sont creuses et comportent des circuits de refroidissement par un débit de comburant secondaire ;
- le circuit de refroidissement de la partie avant comporte un premier orifice ménagé dans le bord d'attaque amont en regard de l'enceinte externe ;
- le circuit de refroidissement de la partie arrière comporte un deuxième orifice ménagé dans sa paroi frontale avant en regard de l'enceinte externe, un troisième orifice étant ménagé dans la paroi arrière de la partie amont en correspondance avec le deuxième orifice afin d'alimenter les parties arrière avec une partie du débit introduit dans la partie avant correspondante lorsque l'anneau tournant est dans la première position ;
- la section du deuxième orifice est supérieure à la section du troisième orifice, afin d'augmenter le débit de refroidissement dans les parties arrière en régime de réchauffe par rapport au régime sec ;
- les troisièmes orifices sont obturés par des languettes d'obturation fixes lorsque l'anneau tournant est dans la deuxième position ;
- la paroi arrière de la partie avant comporte une pluralité d'orifices d'évacuation du comburant de refroidissement, qui sont obturés par la paroi frontale avant de la partie arrière lorsque l'anneau tournant est dans la première position ;
- le dispositif de commande de l'anneau tournant comporte au moins un vérin de commande à double action monté sur la première paroi et traversé par une tige de piston présentant à ses extrémités des roulettes qui circulent sur un câble dont les extrémités sont fixées sur ladite première paroi, ledit câble passant sur des poulies de renvoi portées par ladite première paroi et présentant un brin parallèle à l'anneau tournant et fixé à ce dernier par un taquet.

D'autres avantages et caractéristiques de l'invention ressortiront à la lecture de la description suivante faite à titre d'exemple, non limitatif, et en référence aux dessins annexés dans lesquels :
la figure 1 est une coupe axiale d'un turboréacteur double flux muni d'un dispositif de postcombustion conforme à l'invention ;
la figure 2 est une vue latérale, partiellement écorchée, d'un bras accroche-flammes selon l'invention, en fonctionnement en régime sec ;
la figure 3 est une vue latérale, partiellement écorchée, de la partie arrière du bras accroche-flammes de la figure 2 en régime de postcombustion ;
la figure 4 est une vue latérale, partiellement écorchée, de la partie avant du bras accroche-flammes de la figure 2 en régime de postcombustion ;
la figure 5 montre un mode de réalisation du dispositif de commande pour faire pivoter les parties avant des bras accroche-flammes ;
la figure 6 est une vue axiale du dispositif accroche-flammes selon l'invention en fonctionnement sans réchauffe ;
la figure 7 est une vue axiale du dispositif accroche-flammes selon l'invention en régime de réchauffe ;
la figure 8 est une vue partielle développée du dispositif d'accroche-flammes selon l'invention lors du fonctionnement en régime sec ;
la figure 9 est une vue partielle développée du dispositif d'accroche-flammes selon l'invention lors du fonctionnement en postcombustion.

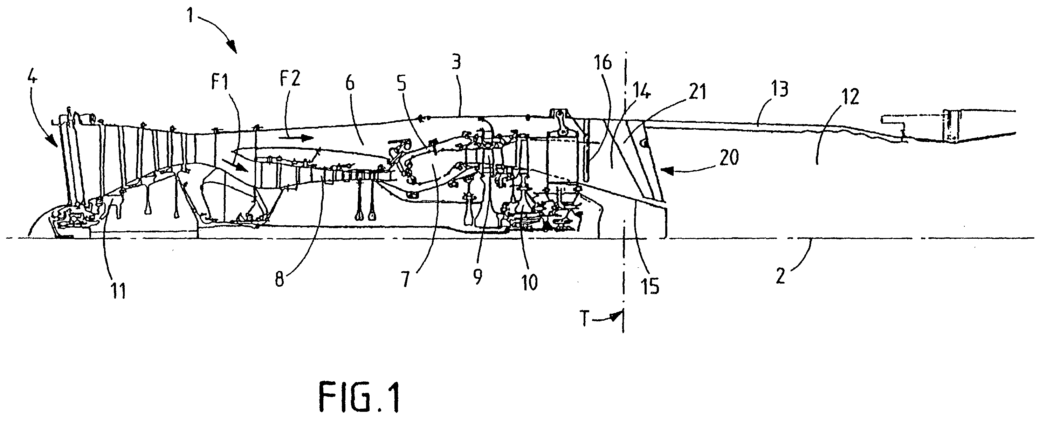

Le turboréacteur 1 représenté sur la figure 1 comporte un axe général de révolution 2, une première paroi externe 3, de révolution d'axe 2, qui s'étend depuis la prise d'air 4 située en amont jusqu'à un plan transversal T perpendiculaire à l'axe 2, une deuxième paroi interne 5, d'axe 2, située à l'intérieur de la première paroi 3 et qui délimité avec cette dernière une enceinte annulaire externe 6, une chambre de combustion 7 disposée à l'intérieur de la deuxième paroi interne 5, en aval d'un compresseur à haute pression 8 et en amont d'une turbine à haute pression 9, une turbine à basse pression 10 recevant les gaz sortant de la turbine à haute pression 9 et destinée à entraîner une soufflante 11 disposée en aval de la prise d'air 4, une chambre de postcombustion 12 délimitée par une troisième paroi 13 d'axe 2 disposée en aval des première 3 et deuxième 5 parois.

L'air qui s'introduit dans la prise d'air 4 est comprimé par la soufflante 11, puis est divisé par la deuxième paroi interne 5 en deux flux, un flux primaire F1 qui participe à la combustion du carburant dans la chambre de combustion 7, et un flux secondaire F2 qui s'écoule dans l'enceinte externe 6.

Le flux primaire F1 est comprimé par le compresseur à haute pression 8 avant son introduction dans la chambre de combustion 7.

A la sortie de la turbine à basse pression 10, les gaz de combustion aboutissent dans une enceinte interne d'échappement 14 et s'écoulent vers la chambre de postcombustion 12.

L'enceinte interne d'échappement 14 est délimitée intérieurement par un dôme 15.

Le flux secondaire F2 s'écoule également à la périphérie de la chambre de postcombustion 12 et sert au refroidissement de la chambre de postcombustion 12. Une partie du flux secondaire F2 peut participer à la combustion du carburant dans la chambre de postcombustion 12 lorsqu'on est en régime de réchauffe.

En fonctionnement en postcombustion, un débit complémentaire de carburant est introduit dans l'enceinte interne d'échappement 14 par des injecteurs 16, réalisés sous forme de bras radiaux. Un dispositif accroche-flammes 20, constitué d'une pluralité de bras radiaux 21 est disposé dans le plan transversal T, en aval de la deuxième paroi interne 5. Chaque bras radial 21 s'étend entre la première paroi externe 3 et le dôme 5.

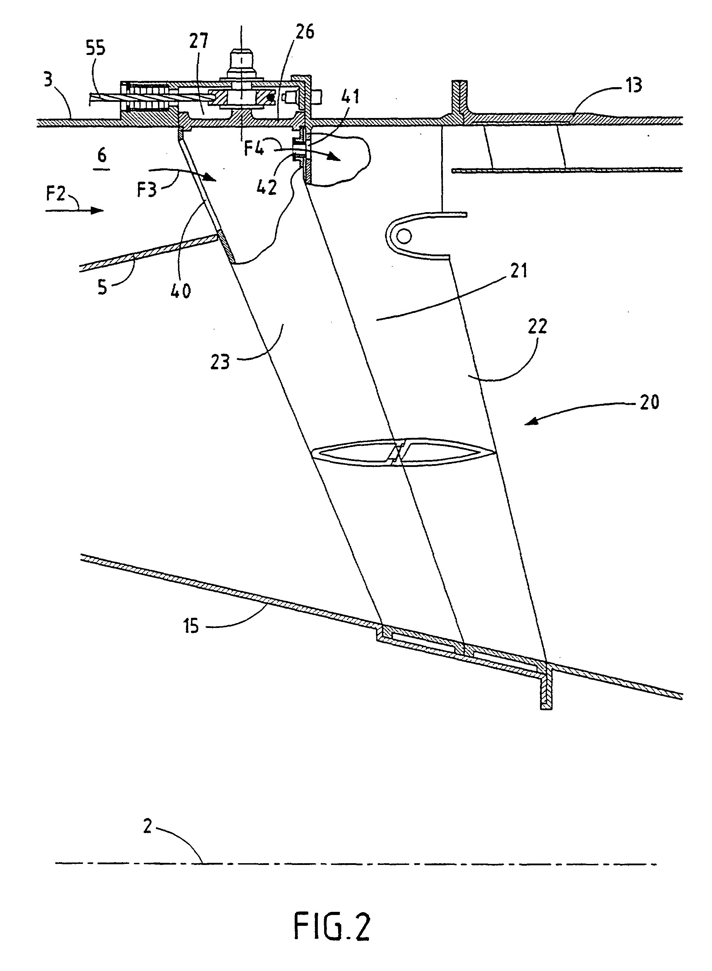

En régime sec, c'est-à-dire sans réchauffe, ainsi qu'on le voit sur les figures 2, 6 et 8, chaque bras 21 se présente sous la forme d'un profil aérodynamique à faible traînée, symétrique par rapport à un plan axial contenant l'axe de révolution 2. Son épaisseur relative est forte et le maître couple du profil est situé au voisinage du milieu de la corde. On utilise par exemple des profils du type NACA, séries 66, 67 ou 64.

Chaque bras 21 est en fait constitué de deux parties creuses, une partie arrière fixe 22 et une partie avant 23 séparable de la partie arrière 22 selon un plan de joint médian 24 situé au niveau du maître couple du profil.

Les parties arrière 22 sont fixées au carter externe soit au niveau de la première paroi 3 soit au niveau de la troisième paroi 13. Elles présentent une section globalement triangulaire, délimitée par une paroi frontale avant 25 et deux parois latérales 26a, 26b formant un V avec la pointe dirigée vers l'aval.

Les parties avant 23 des bras 21 sont fixées par leurs extrémités externes sur un anneau tournant 26, de révolution autour de l'axe 2, disposé dans une rainure interne 27 du carter constituant l'extrémité aval de la première paroi externe 3. Chaque partie avant 23 présente une section globalement triangulaire délimitée par une paroi arrière 28 et deux parois latérales 29a, 29b formant un V avec la pointe dirigée vers l'amont.

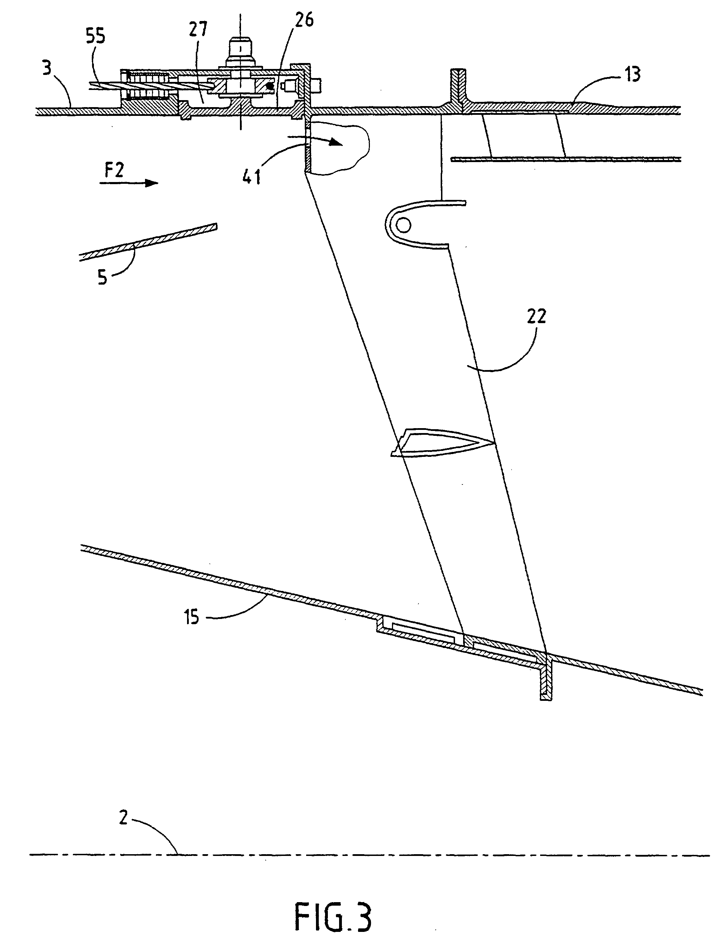

L'anneau tournant 26 peut pivoter, sous l'action d'un dispositif de commande 30, décrit en détail plus loin dans le présent mémoire, entre une première position, en régime sec, représentée sur les figures 2, 6 et 8, dans laquelle les parties avant 23 sont jointives avec les parties arrière 22 et disposées devant ces dernières, et une deuxième position, en régime de réchauffe, représentée sur les figures 3, 4, 7 et 9, dans laquelle les parties avant 23 sont intercalées entre le parties arrière 22 à l'avant du plan de joint 24.

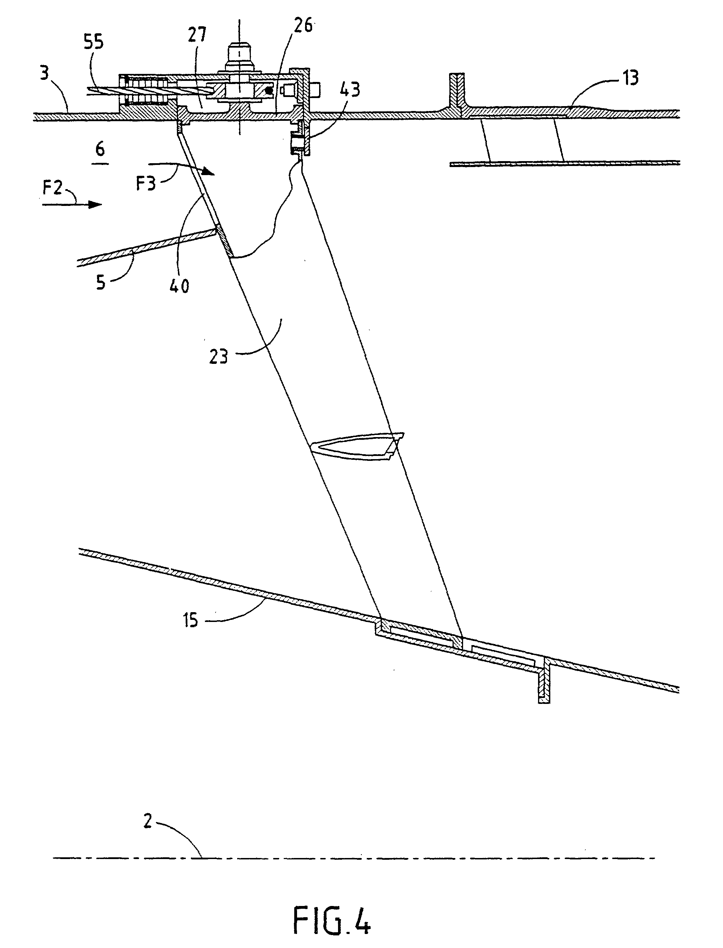

Ainsi qu'on le voit clairement sur les figures 2 et 4, une partie F3 du flux secondaire F2 pénètre à l'intérieur de chaque partie avant 23 par un premier orifice 40 ménagé dans le bord d'attaque amont en regard de l'enceinte externe 6.

En régime sec, c'est-à-dire lorsque l'anneau tournant 26 est dans la première position, montrée sur la figure 2, un débit F4 pénètre à l'intérieur de la partie arrière 22 par un deuxième orifice 41 ménagé dans la paroi frontale 25 en regard de l'enceinte externe 6. Un troisième orifice calibré 42 est prévu dans la paroi arrière 28 de la partie avant 23 en face du deuxième orifice 41. Ainsi, en régime sec, une quantité d'air F4, dosé par le troisième orifice calibré 42, sert au refroidissement de la partie arrière 22. La section du deuxième orifice calibré 42 sert au refroidissement de la partie arrière 22. La section du deuxième orifice 41 est supérieure à la section du troisième orifice calibré 42, ce qui fait qu'en fonctionnement en postcombustion, représenté sur la figure 3, une quantité supérieure d'air de refroidissement pénètre à l'intérieur des parties arrière 22.

Lorsque l'anneau tournant 26 est dans la deuxième position, les troisièmes orifices calibrés 42 des parties avant sont obturés par des languettes d'obturation 43 fixes prévues sur le carter extérieur.

Les parois arrière 28 des parties avant 23 comportent latéralement deux rangées d'orifices 44 et 45, par lesquels s'écoule l'air de refroidissement ayant pénétré à l'intérieur des parties avant 23, lorsque l'anneau tournant 26 est dans la deuxième position. Ces orifices 44 et 45 sont obturées par la face frontale 25 des parties arrière 22 en régime sec.

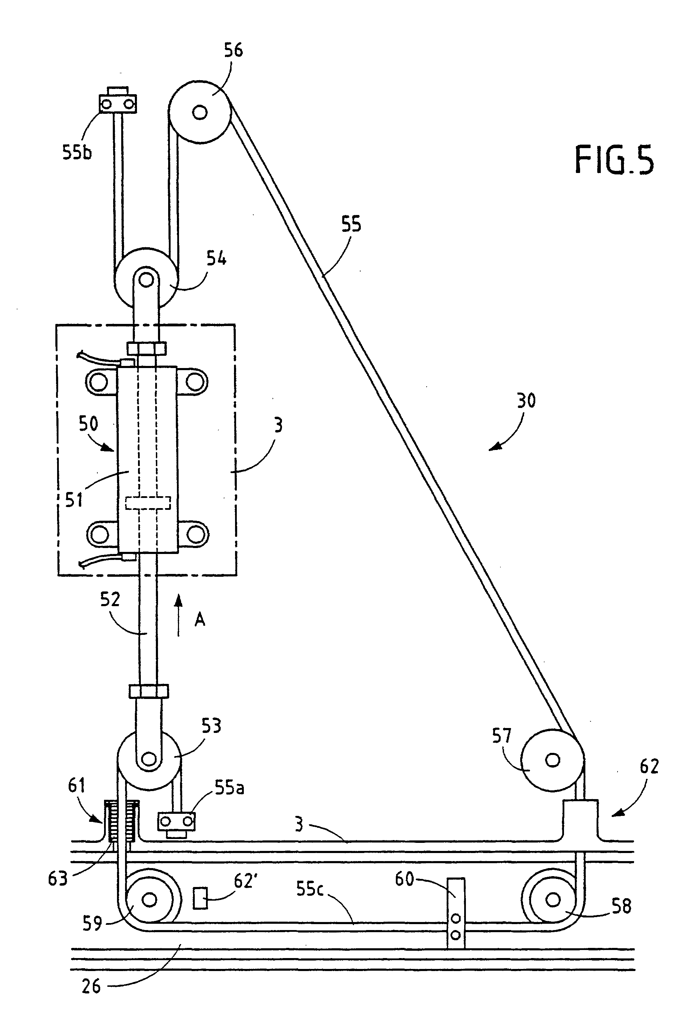

La figure 5 montre un mode de réalisation du dispositif de commande 30 qui permet de faire pivoter l'anneau tournant 26 dans la rainure 27, de la première position, en régime sec, vers la deuxième position, en régime de postcombustion, ou vice-versa.

Ce dispositif de commande 30 comporte essentiellement un vérin 50, à double action, dont le cylindre 51 est fixé sur la première paroi externe 3, et dont la tige de piston 52 traverse les parois d'extrémité du cylindre 51. La tige de piston 52 traverse les parois d'extrémité du cylindre 51. La tige du piston 52 comporte à ses deux extrémités des roulettes 53, 54. Les roulettes 53, 54 circulent sur un câble 55, dont les extrémités 55a, 55b sont fixées sur la première paroi 3. Le câble 55 passe sur quatre poulies de renvoi 56, 57, 58, 59 montées sur la première paroi 3, de façon à former un moufle qui permet de réduire de moitié la course de la tige de vérin 52. Les poulies de renvoi 58, 59 sont déposées dans la rainure 27 qui sert de logement et de guide à l'anneau tournant 26. L'anneau tournant 26 est fixé au brin de câble 55b qui s'étend entre les poulies de renvoi 58, 58 par un taquet 60.

Des ouvertures 61, 62 sont prévues dans le flanc de la rainure 27 pour le passage du câble 55. L'étanchéité à l'air entre le câble 55 et les parois de ces ouvertures 61, 62 est assurée par des cartouches cylindriques 63 comportant des brosses qui frottent sur le câble. Ces brosses sont réalisées dans un matériau non agressif, en carbone par exemple.

En partant de la représentation de la figure 5, où le taquet 60, solidaire du câble 55 de l'anneau tournant 26 est situé à droite, et qui correspond par exemple à une première position dans laquelle les parties avant 23 des bras 21 sont disposées devant les parties arrière 22, il est possible de définir les actions nécessaires pour faite tourner l'anneau tournant 26.

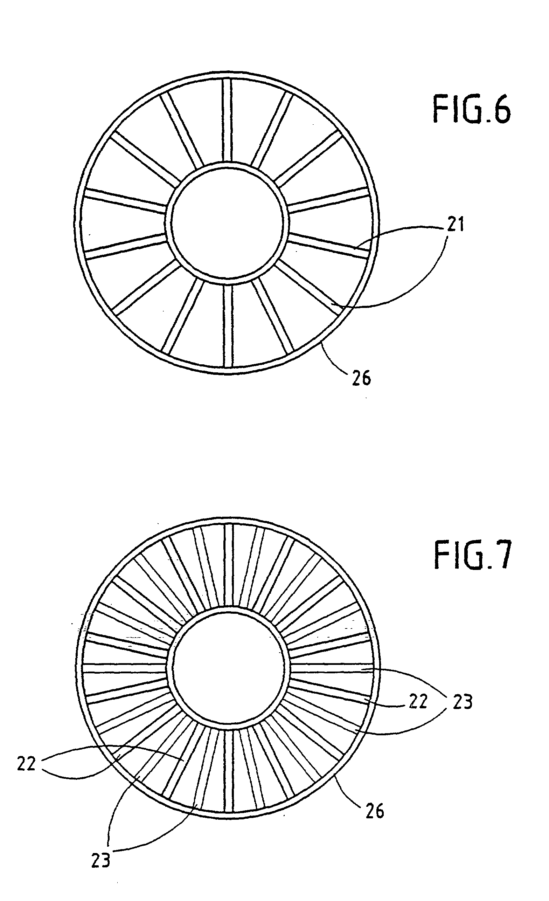

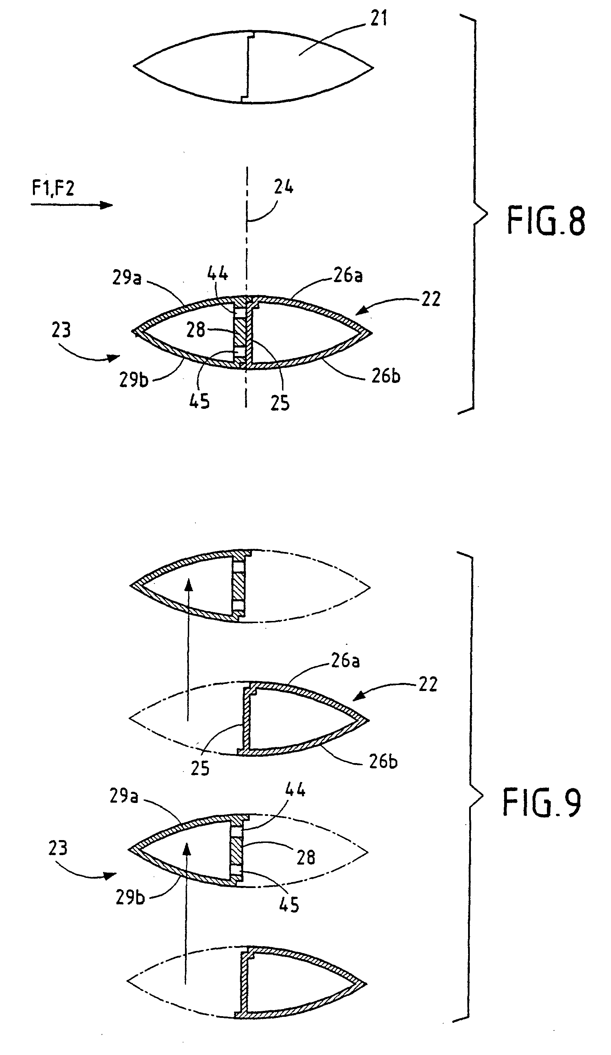

En faisant coulisser la tige de piston 52 dans le sens de la flèche A, la roulette 53 tire le câble 55. Le câble 55, solidaire de l'anneau tournant 26 par le taquet 62, le fait tourner dans la rainure 27 jusqu'à ce que le taquet 62 atteigne la position 62'. Dans cette deuxième position, les parties avant 23 des bras 21 sont intercalées entre les parties arrière 22, ainsi que cela est montré sur les figures 7 et 9.

Cette deuxième position est utilisée lors du fonctionnement de la postcombustion. Les parois frontales avant 25 des parties arrière 22 constituent des obstacles non profilés qui génèrent des turbulences capables de stabiliser la flamme. Les parois arrière 28 des parties avant 23 provoquent également des turbulences par effet de culot plat et stabilisent la flamme.

## Revendications

1. Dispositif de postcombustion pour turboréacteur double flux comprenant
une enceinte annulaire externe (6), qui est délimitée par une première paroi externe (3) et par une deuxième paroi interne (5) possédant, chacune, un axe de sensible révolution (2), qui leur est commun, ladite enceinte constituant un canal d'écoulement de comburant secondaire ;
une enceinte interne d'échappement (14) qui est contenue à l'intérieur de la deuxième paroi interne (5) en étant séparée de l'enceinte externe (6) par ladite deuxième paroi interne (5) et qui, disposée en aval d'aubages de turbine, constitue un canal d'échappement des gaz s'échappant desdits aubages ;
une chambre de postcombustion (12), qui est délimitée par une troisième paroi (13) disposée axialement en aval desdites première (3) et deuxième (5) parois et qui constitue un prolongement axial vers l'aval desdites enceintes externe (6) et d'échappement (14); et
un dispositif accroche-flammes (20) comportant une pluralité (21) de bras sensiblement radiaux régulièrement repartis autour de l'axe de révolution (2), ledit dispositif accroche-flammes étant disposé entre les enceintes interne (14) et externe (6), d'une part, et la chambre de postcombustion (12), d'autre part, **caractérisé par le fait que** chaque bras est constitué d'une partie arrière (22) fixe et d'une partie avant (23) séparable de la partie arrière (22) selon un plan de joint médian (24) sensiblement perpendiculaire à l'axe de révolution (2), les parties avant sont fixées sur un anneau tournant (26) monté rotatif à l'extrémité aval de la première paroi (3) et il est prévu un dispositif de commande (30) pour faire pivoter l'anneau tournant (26) autour de l'axe de révolution (2) entre une première position, en régime sec, dans laquelle les parties avant (23) sont jointives avec les parties arrière (22), et une deuxième position, en régime de chauffe dans laquelle les parties avant (23) alternent circonférentiellement avec les parties arrière (22), les parties avant (23) et les parties arrière (22) formant ensemble des profils aérodynamiques à faible traînée et à angle d'incidence nul, lorsque l'anneau tournant (26) est dans la première position.

2. Dispositif de postcombustion selon la revendication 1, **caractérisé par le fait que** les parties avant (23) et les parties arrière (22) sont creuses et comportent des circuits de refroidissement par un débit (F3) de comburant secondaire.

3. Dispositif de postcombustion selon la revendication 2, **caractérisé par le fait que** le circuit de refroidissement de la partie avant (23) comporte un premier orifice (40) ménagé dans le bord d'attaque amont en regard de l'enceinte externe (6), et le circuit de refroidissement de la partie arrière (22) comporte un deuxième orifice (41) ménagé dans sa paroi frontale (25) avant en regard de l'enceinte externe (6), un troisième orifice calibré (42) étant ménagé dans la paroi arrière (28) de la partie amont en correspondance avec le deuxième orifice (41) afin d'alimenter les parties arrière avec une partie (F4) du débit (F3) introduit dans la partie avant (23) correspondante lorsque l'anneau tournant (26) est dans la première position ;

4. Dispositif de postcombustion selon la revendication 3, **caractérisé par** le fait les troisièmes orifices (42) sont obturés par des languettes d'obturation (43) fixes lorsque l'anneau tournant (26) est dans la deuxième position.

5. Dispositif de postcombustion selon l'une des revendications 3 ou 4, **caractérisé par le fait que** la section du deuxième orifice (41) est supérieure à la section du troisième orifice (42).

6. Dispositif de postcombustion selon l'une quelconque des revendications 3 à 5, **caractérisé par le fait que** la paroi arrière (28) de la partie avant (23) comporte une pluralité d'orifices (44, 45) d'évacuation du comburant (25) de refroidissement qui sont obturés par la paroi frontale (25) avant de la partie arrière (22) lorsque l'anneau tournant (26) est dans la première position.

7. Dispositif de postcombustion selon l'une quelconque des revendications 1 à 6, **caractérisé par le fait que** le dispositif de commande (30) de l'anneau tournant (26) comporte au moins un vérin de commande (50) à double action monté sur la première paroi (3) et traversé par une tige de piston (51) présentant à ses extrémités des roulettes (53, 54) qui circulent sur un câble (55) dont les extrémités (55a, 55b) sont fixées sur ladite première paroi (3), ledit câble (55) passant sur des poulies de renvoi (56, 57, 58, 59) portées par ladite première paroi (3) et présentant un brin (55c) parallèle à l'anneau tournant (26) et fixé à ce dernier par un taquet (62).

## Patentansprüche

1. Nachbrenner für Zweikreis-TL-Triebwerke bestehend aus:
- einem äußeren ringförmigen Raum (6), der von einer ersten, äußeren Wand (3) und einer zweiten, inneren Wand (5) umgrenzt wird, die beide eine Drehachse (2) haben, die ihnen gemeinsam ist, wobei dieser Raum einen Strömungskanal für Sekundär-Sauerstoffträger bildet,
- einem inneren Ausstoßraum (14), der sich im Inneren der zweiten, inneren Wand (5) befindet, wobei er durch diese zweite, innere Wand (5) von dem äußeren Raum (6) getrennt ist, und der hinter den Beschaufelungen der Turbine angeordnet einen Ausstoßkanal für die Gase bildet, die von diesen Beschaufelungen kommen,
- einer Nachverbrennungskammer (12), die von einer dritten, axial hinter der genannten ersten und zweiten Wand (3, 5) angeordneten Wand (13) umgrenzt wird und die eine axiale Verlängerung des genannten äußeren Raums (6) und Ausstoßraums (14) nach hinten bildet, und
- einem Flammenhalter (20), der eine Vielzahl von Armen (21) aufweist, die im wesentlichen radial verlaufen und gleichmäßig um die Drehachse (2) verteilt angeordnet sind, wobei dieser Flammenhalter zwischen dem inneren Raum (14) und dem äußeren Raum (6) einerseits und der Nachverbrennungskammer (12) andererseits angeordnet ist,
**dadurch gekennzeichnet,**
**dass** jeder Arm aus einem feststehenden hinteren Teil (22) und einem vorderen Teil (23) besteht, der von dem hinteren Teil (22) abtrennbar ist, und zwar in einer mittleren Verbindungsebene (24), die im wesentlichen im rechten Winkel zu der Drehachse (2) verläuft, dass die vorderen Teile an einem drehenden Ring (26) befestigt sind, der drehbar am hinteren Ende der ersten Wand (3) angebracht ist, und dass eine Steuervorrichtung (30) vorgesehen ist, um den drehenden Ring (26) um die Drehachse (2) schwenken zu lassen, und zwar zwischen einer ersten Stellung im Trockenbetrieb, bei der die vorderen Teile (23) sich mit den hinteren Teilen (22) zusammenfügen, und einer zweiten Stellung im Heizbetrieb, bei der die vorderen Teile (23) sich auf dem Umfang mit den hinteren Teilen (22) abwechseln, wobei die vorderen Teile (23) und die hinteren Teile (22) zusammen aerodynamische Profile mit geringem Luftwiderstand und mit einem Einfallwinkel von Null bilden, wenn der drehende Ring (26) sich in der ersten Stellung befindet.

2. Nachbrenner nach Anspruch 1,
**dadurch gekennzeichnet,**
**dass** die vorderen Teile (23) and die hinteren Teile (22) hohl sind und Kühlkreise mit einer Durchflussmenge (F3) des Sekundär-Sauerstoffträgers enthalten.

3. Nachbrenner nach Anspruch 2,
**dadurch gekennzeichnet,**
**dass** der Kühlkreis des vorderen Teils (23) eine erste Öffnung (40) enthält, die in der Vorderkante gegenüber dem äußeren Raum (6) ausgeführt ist, und der Kühlkreis des hinteren Teils (22) eine zweite Öffnung (41) enthält, die in dessen vorderer Stirnwand (25) gegenüber dem äußeren Raum (6) ausgeführt ist, wobei eine dritte, kalibrierte Öffnung (42) in der hinteren Wand (28) des vorderen Teils im Anschluss an die zweite Öffnung (41) ausgeführt ist, um den hinteren Teilen einen Teil (F4) der Durchflussmenge (F3) zuzuführen, die in den entsprechenden vorderen Teil (23) eingeführt wird, wenn der drehende Ring (26) sich in der ersten Stellung befindet.

4. Nachbrenner nach Anspruch 3,
**dadurch gekennzeichnet,**
**dass** die dritten Öffnungen (42) durch feststehende Schließzungen (43) verschlossen werden, wenn der drehende Ring (26) sich in der zweiten Stellung befindet.

5. Nachbrenner nach einem der Ansprüche 3 oder 4,
**dadurch gekennzeichnet,**
**dass** der Querschnitt der zweiten Öffnung (41) größer ist als der Querschnitt der dritten Öffnung (42).

6. Nachbrenner nach einem der Ansprüche 3 bis 5,
**dadurch gekennzeichnet,**
**dass** die hintere Wand (28) des vorderen Teils (23) eine Vielzahl von Auslassöffnungen (44, 45) für den Kühlungs-Sauerstoffträger enthält, die von der vorderen Stirnwand (25) des hinteren Teils (22) verschlossen werden, wenn der drehende Ring (26) sich in der ersten Stellung befindet.

7. Nachbrenner nach einem der Ansprüche 1 bis 6,
**dadurch gekennzeichnet,**
**dass** die Steuervorrichtung (30) des drehenden Rings (26) mindestens einen doppelwirkenden Steuerzylinder (50) enthält, der an der ersten Wand (3) angebracht ist und durch den eine Kolbenstange (51) verläuft, die an ihren Enden Rollen (53, 54) aufweist, die auf einem Kabel (55) laufen, lessen Enden (55a, 55b) an dieser ersten Wand (3) befestigt sind, wobei dieses Kabel (55) über Umlenkrollen (56, 57, 58, 59) läuft, die an dieser ersten Wand (3) sitzen, und einen Abschnitt (55c) aufweist, der parallel zu dem drehenden Ring (26) verläuft und an letzterem mittels einer Klampe (60) befestigt ist.

## Claims

1. Afterburning device for a bypass turbojet comprising:
an outer annular space (6) which is delimited by an outer first wall (3) and by an inner second wall (5) each having an axis of almost revolution (2), which is common to them, the said space constituting a secondary oxidizing air flow duct;
an internal exhaust space (14) which is contained inside the inner second wall (5) being separated from the outer space (6) by the said inner second wall (5) and which, arranged downstream of the turbine blading, constitutes an exhaust duct for the gases escaping from the said blading;
an afterburning chamber (12) which is delimited by a third wall (13) arranged axially downstream of the said first (3) and second (5) walls and which constitutes an axial prolongation in the downstream direction of the said outer (6) and
exhaust (14) spaces; and
a flameholder device (20) comprising a plurality of substantially radial arms (21) uniformly distributed about the axis of revolution (2), the said flameholder device being arranged between the inner (14) and outer (6) spaces, on the one hand, and the post combustion chamber (12), on the other, **characterized in that** each arm consists of a fixed rear part (22) and of a front part (23) separable from the rear part (22) along a central parting plane (24) substantially perpendicular to the axis of revolution (2), the front parts are fixed on a rotating ring (26) mounted so that it can rotate at the downstream end of the first wall (3) and a control device (30) is provided for causing the rotating ring (26) to pivot about the axis of revolution (2) between a first position, under "dry" conditions, in which position the front parts (23) are contiguous with the rear parts (22), and a second position, under reheat conditions, in which position the front parts (23) alternate circumferentially with the rear parts (22), the front parts (23) and the rear parts (22) together forming low-drag aerodynamic profiles with zero angle of incidence when the rotating ring (26) is in the first position.

2. Afterburning device according to Claim 1, **characterized in that** the front parts (23) and the rear parts (22) are hollow and comprise circuits for cooling using a flow (F2) of secondary oxidizing air.

3. Afterburning device according to Claim 2, **characterized in that** the circuit for cooling the front part (23) comprises a first orifice (40) made in the upstream leading edge facing the outer space (6), and the circuit for cooling the rear part (22) comprises a second orifice (41) made in its front transverse wall (25) facing the outer space (6), a calibrated third orifice (42) being made in the rear wall (28) of the upstream part to correspond with the second orifice (41) so as to supply the rear parts with some (F4) of the flow (F3) introduced into the corresponding front part (23) when the rotating ring (26) is in the first position.

4. Afterburning device according to Claim 3, **characterized in that** the third orifices (42) are shut off by fixed shut-off tabs (43) when the rotating ring (26) is in the second position.

5. Afterburning device according to either of Claims 3 and 4, **characterized in that** the cross section of the second orifice (41) is greater than the cross section of the third orifice (42).

6. Afterburning device according to any one of Claims 3 to 5, **characterized in that** the rear wall (28) of the front part (23) comprises a plurality of orifices (44, 45) for the removal of the cooling oxidizing air (25), which orifices are shut off by the front transverse wall (25) of the rear part (22) when the rotating ring (26) is in the first position.

7. Afterburning device according to any one of Claims 1 to 6, **characterized in that** the control device (30) for controlling the rotating ring (26) comprises at least one double-acting control ram (50) mounted on the first wall (3) and through which there passes a piston rod (51) having, at its ends, rollers (53, 54) which run along a cable (55) the ends (55a, 55b) of which are fixed to the said first wall (3), the said cable (55) passing over return pulleys (56, 57, 58, 59) borne by the said first wall (3) and having a length (55c) parallel to the rotating ring (56) and fixed to the latter by a pleat (62).
